# EUROPÄISCHE PATENTSCHRIFT

(11) **EP 0 727 147 B1**
(45) Veröffentlichungstag und Bekanntmachung des Hinweises auf die Patenterteilung: **02.05.2001**
(21) Anmeldenummer: 96102161.5
(22) Anmeldetag: 14.02.1996
(51) Int. Cl.: A23G 1/18, A23G 1/12, A23G 1/04, A23G 1/10, A23G 1/14

(54) **Vorrichtung zum kontinuierlichen Temperieren oder Vorkristallisieren von Schokoladenmasse**
Installation for tempering and pre-crystallisation of chocolate-masses
Installation de conditionnement en température et de précristallisation de masses de chocolat

(30) Priorität: 17.02.1995 IT MI950290
(43) Veröffentlichungstag der Anmeldung: 21.08.1996
(73) Patentinhaber: CARLE & MONTANARI S.p.A., 20141 Milano (IT)
(72) Erfinder: Bertini, Angelo, I-20017 Rho (IT)
(74) Vertreter: Mayer, Hans Benno, Dipl.-Ing.

(56) Entgegenhaltungen:
- EP-A- 0 339 129
- EP-A- 0 654 222
- GB-A- 1 070 264
- US-A- 4 279 295
- US-A- 4 648 315
- US-A- 5 264 234

## Beschreibung

Die vorliegende Erfindung bezieht sich auf eine Vorrichtung für die kontinuierliche und überwachte Temperierung oder Vorkristallisierung von Massen, die Fette enthalten, insbesondere von Schokoladenmassen.

Es ist bekannt, daß die Kakaobuttermenge, die in einer Schokoladenmasse enthalten ist, sehr ausgeprägte Merkmale von Polymorphie und Monotropie aufweist. Dies bedeutet, daB die Schokoladenmasse durch die Kakaobutter, die in der Masse enthalten ist, die Bildung von verschiedenen Fettkristallen gestattet, die gewöhlich mit "gamma", "alpha", "beta' " und "beta' ' " gekennzeichnet werden.

Mit diesen Bezeichnungen werden in dem spezifisch-technischen Bereich Veränderungen oder spezifische Formen der Kristallstruktur und somit der Schokoladenmasse gekennzeichnet, die sehr unterschiedliche Produktbeständigkeit aufweisen kann, und Eigenschaften darstellen, die bestimmend für die mechanische Struktur und Festigkeit des Erzeugnisses sind. Eigenschaften, die wichtig sind, um z.B. ein glänzendes Schokoladenprodukt, ein sehr kompaktes, ein gleichförmiges oder ein lange lagerbares Erzeugnis herzustellen.

Die mit "gamma", "alpha", "beta' " und "beta' ' " bezeichneten Kristallformen können innerhalb sehr genau definierter Temperaturbereiche existieren. So z.B. kann die Kristallform "gamma" nicht über einer Temperatur von 17°C existieren, die Kristallform "alpha" kann nicht über einer Temperatur von 24°C bestehen, die Kristallform "beta"' existiert nicht bei Temperaturen über 29°C, während die stabile Form "beta" bis zu Temperaturen von ungefähr 35°C bestehen kann.

Den Fachleuten, besonders den Schokoladenherstellern, ist es bekannt, daß die Bildung der Fettkristalle vor allem von der Bearbeitungstemperatur der Masse, durch die Homogenisierung oder durch das Vermischen der Masse, sowie durch die Schnittkraft, der die Fettpartikel während einer mechanischen Behandlung ausgesetzt sind, gefördert wird und in entscheidender Weise eine Vermehrung der Kristallkeime eintritt und eine ständige Teilung und gleichmäßige Verteilung in der Verarbeitungsmasse erfolgt.

In bekannten Temperiermaschinen versucht man, so weit als möglich, die vorher beschriebenen Vorgänge auszunützen, indem die zu bearbeitende Masse wärmetechnisch beeinflußt wird, indem z.B. die Schokoladenmasse auf Temperaturen unter 35°C gekühlt wird, um somit "beta"-Kristalle zu erzeugen, die als besonders stabile Kristalle gelten.

Deshalb ist es vom Stand der Technik her bekannt, eine Kühlung der Schokoladenmasse durchzuführen mit dem Versuch, dadurch die Geschwindigkeit einer Bildung von Kristallkeimen zu erhöhen.

Die thermische als auch die mechanische Bearbeitung verlangt zur Temperierung in den bekannten Vorrichtungen eine sehr lange Bearbeitungszeit, Vorgang der das Vorhandensein von Einrichtungen mit bedeutenden Arbeitsvolumen verlangt, um somit die Forderungen, die durch eine moderne Industrieproduktion vorgegeben werden, erfüllen zu können.

In den bekannten Vorrichtungen wird die Schokoladenmasse nach dem Kühlvorgang einem kurzen Erwärmungsvorgang unterzogen bis kurz über dem Schmelzpunkt der unstabilen Teilmasse, man bleibt jedoch unter dem Schmelzpunkt der stabilen Kristallform, die mit "beta" bezeichnet wird. Mit diesem Vorgang der abschließenden Erwärmung wird ein neues Schmelzen der nicht stabilen Kristalle bewirkt, und infolgedessen wird nur eine Auswahl der stabilen Kristalle durchgeführt, die als Katalysator während der nächsten Aushärtungsphase des Produktes wirksam werden, d.h. nachdem die Schokoladenmasse in die Gießform eingegossen wurde.

Es ist sehr wichtig, daß während des Temperier- oder Vorkristallisierungsvorganges eine gewisse Anzahl stabiler Kristalle in genügender Menge gebildet wird, um ein korrektes Erstarren des Endproduktes zu gewährleisten; es sei daran erinnert, daß die Kristallmenge, die während des Temperierungsvorganges gebildet wird, auch die Produkttemperatur für die folgenden Bearbeitungsvorgänge der Schokoladenmasse festlegen.

Da die niedrige Temperatur mindestens die Beibehaltung einer ausreichenden Verflüssigung für die Bearbeitung des Produktes in den Gießformen gewährleistet, die gewöhlich bei 30°C für die Fondentschokoladeliegt, stellt die Möglichkeit mit Abweichungen von 1 - 2° C gegenüber der üblichen Temperatur arbeiten zu können (mit Rücksicht auf den Schmelzpunkt der stabilen Form der Masse) einen enormen Vorteil dar, sei es was die Einfachheit der Verarbeitung in den modernen Eintafelanlagen, sei es was die Belastung der mechanischen Bauteile der Temperiereinrichtung und der damit verbundenen Maschinen betrifft, da eine Verminderung der Viskosität des Produktes im Verhältnis zur Temperatur der Masse (ungefähr 3 % pro Temperaturgrad) vorliegt. Diese Möglichkeit kann jedoch nur und ausschließlich dann genützt werden, wenn eine Menge stabiler Kristallkeime bereits gebildet wurde und ausreichend groß für eine korrekte zukünftige Erstarrung des Schokoladenprodukts ist.

Im anderen Fall, wie es der Fall in bekannten Temperiereinrichtungen ist, wird der Temperiervorgang bei niedrigen Temperaturen durchgeführt und die Verweilzeit des Produktes in der Eintafelanlage bei relativ niedrigen Temperaturen wird ausgenützt, um die Menge des kristallisierten Fettes fortwährend zu vermehren, bevor eine Behandlung in Kühlschränken die Qualität der Kristallsierung negativ beeinflussen könnte. Der Mechanismus des Kristallisierungsvorganges schreitet hauptsächlich durch Eigenkatalysierung fort. Ist also während des Kühlvorganges eine genügende Anzahl an homogen verteilten Kristallen vorhanden, damit eine Katalysierung eingeleitet werden kann, indem die Kristallisierung des Restfettgehaltes erfolgt, um eine stabile Form zu erhalten, so wird der Kristallisationsprozeß korrekt ablaufen. Ist aber die Anzahl von stabilen Kristallkeimen in nicht genügender Menge vorhanden und sind diese Keime nicht homogen verteilt, so wird der Kühlungvorgang in den Kühleinrichtungen die Bildung nicht stabiler Kristalle in Abhängigkeit von der Temperatur, die das Produkt einnimmt, hervorgerufen. Infolgedessen wird man eine Bildung, sei es von stabilen "Beta"-Kristallen haben, die durch Vermehrung der schon vorhandenen Kristalle erreicht wird, sowie der nicht stabilen Kristalle der "Beta"-Form, die all die Probleme hervorrufen werden, die dem Fachmann bekannt sind und an eine sogenannte "Untertemperierung" gebunden sind; die Folge ist, daß ein Produkt erzeugt wird, das nicht ausreichend temperiert wurde.

Bekannte Temperierungsmaschinen erlauben nur teilweise, die Schwierigkeiten, die zum Stand der Technik gehören, zu beseitigen, so daß es nicht möglich ist, eine genaue Kontrolle des in den bekannten Temperierungseinrichtungen behandelten Produktes durchzuführen, Kontrolle, die hauptsächlich eine Kühlung bei genau festgelegter Temperatur der Masse vorsieht, um eine definierte Kristallisierung zu erhalten. Weiterhin ist es in den bekannten Vorrichtungen nicht möglich, eine genaue mechanische Bearbeitung zum Beeinflussen des Produktes während des Temperiervorganges, des Mischens und der Homogenisierung der Schokoladenmasse durchzuführen, denn es ist nicht möglich, die Schnittkräfte, denen die Fettpartikel ausgesetzt sind, zu kontrollieren oder diese Kräfte genau festzulegen.

Schließlich haben die vom Stand der Technik her bekannten Geräte zum Temperieren einen verhältnismäßig großen Platzbedarf und die Zeit, die für den Temperiervorgang oder die Vorkristallisierung je Produkteinheit notwendig ist, ist erheblich.

Aufgabe der vorliegenden Erfindung ist es, die Nachteile des Standes der Technik zu vermeiden, indem eine neue Vorrichtung zum Temperieren oder Vorkristallsieren, besonders von Schokoladenmassen vorgeschlagen wird, deren Raumbedarf sehr gering ist, die es aber erlaubt, einen hohen Leistungsgrad der Vorrichtung zu erreichen, die es ermöglicht, eine Kühlung sowie eine Erwärmung der Schokoladenmasse auf genaue und vorbestimmte Temperaturen während des Verweilens in der Maschine zu erreichen, und die es weiterhin erlaubt, die Schokoladenmasse hohen Schnittkräften und einer innigen Duchmischung auszusetzen, um die Bildung der "Beta"-Kristalle auf das höchste zu förden und sehr kurze Bearbeitungszeiten einzuhalten.

Diese Aufgabe wird mit einer Temperiereinrichtung gelöst, die aus einem ortsfesten Körper besteht, der mit einem drehbar gelagerten Körper zusammenarbeitet und der über Ein- und Ausgänge für eine Kühlflüssigkeit verfügt und Ein- und Ausgänge für das zu bearbeitende Erzeugnis aufweist und dadurch gekennzeichnet ist, daß der ortsfest angeordnete Körper und der drehbar gelagerte Körper die Form einer runden Scheibe aufweisen, daß die Scheiben auf den sich gegenüberliegenden Flächen ringförmige, koaxiale Vorsprünge aufweisen und die ringförmigen Vorsprünge der einen Scheibe in ringförmige Ausnehmungen, die zwischen den ringförmigen Vorsprüngen der anderen Scheibe gebildet sind, eindringen, und im Querschnitt einen mäanderförmigen Verlauf definieren, der sich vom Eingang des zu bearbeitenden Produktes bis zum Ausgang des bearbeiteten Produktes erstreckt und daß unter den Mantelflächen der Bleche, welche die ringförmigen Vorsprünge bilden, Kanäle für eine Kühlungsflüssigkeit vorgesehen.

Mit einer Temperiereinrichtung, die diese Merkmale aufweist, wird es möglich, den Wirkungsgrad einer Temperiervorrichtung mit sehr kleinen Abmessungen wesentlich zu erhöhen.

Dank dem mäanderartigen Verlauf, der zwischen den zwei scheibenförmigen Bauteilen verwirklicht ist, kann das zu bearbeitende Produkt in einem kontinuierlichen Fertigungsprozeß verarbeitet werden, und zwar in Form eines dünnen Films, der die Vorrichtung durchläuft; da Kanäle für den Durchlauf von Kühlflüssigkeit vorgesehen sind, erhält man eine rasche und kontrollierte Kühlung der filmartigen Schokoladenmasse, die die Temperiereinrichtung von ihrem Eingang zum Ausgang durchläuft, und somit eine rasche Bildung von stabilen Kristallen des "Beta"-Typs.

Dank der Vorsehung von großen mäanderartigen Flächen, die zwischen den ringförmigen Vorsprüngen gebildet werden, die auf der festen Scheibe und der sich drehenden Scheibe angeordnet sind, erhält man einen ausgezeichneten Wärmeaustausch und eine ausgezeichnete Schnittwirkung mittels überwachbarer Kräfte, die auf die Fettpartikel in kontrollierter Weise einwirken.

Dank der Vorsehung zahlreicher Kanäle für die verwendete Kühlungsflüssigkeit und die Umformung des zu bearbeitenden Erzeugnisstromes in einen dünnen Film, wird es möglich, den Kühlvorgang in bester Weise zu regeln.

Der nach der vorliegenden Erfindung ausgebildete Gegenstand wird nun ausführlich beschrieben und anhand eines Ausführungsbeispieles in den beiliegenden Zeichnungen dargestellt.

Es zeigen:
Fig. 1 die Vorrichtung gemäß der vorliegenden Erfindung, teilweise in Ansicht und teilweise im Schnitt;
Fig. 2 die Temperiereinrichtung im Querschnitt und in vergrößertem Maßstab.

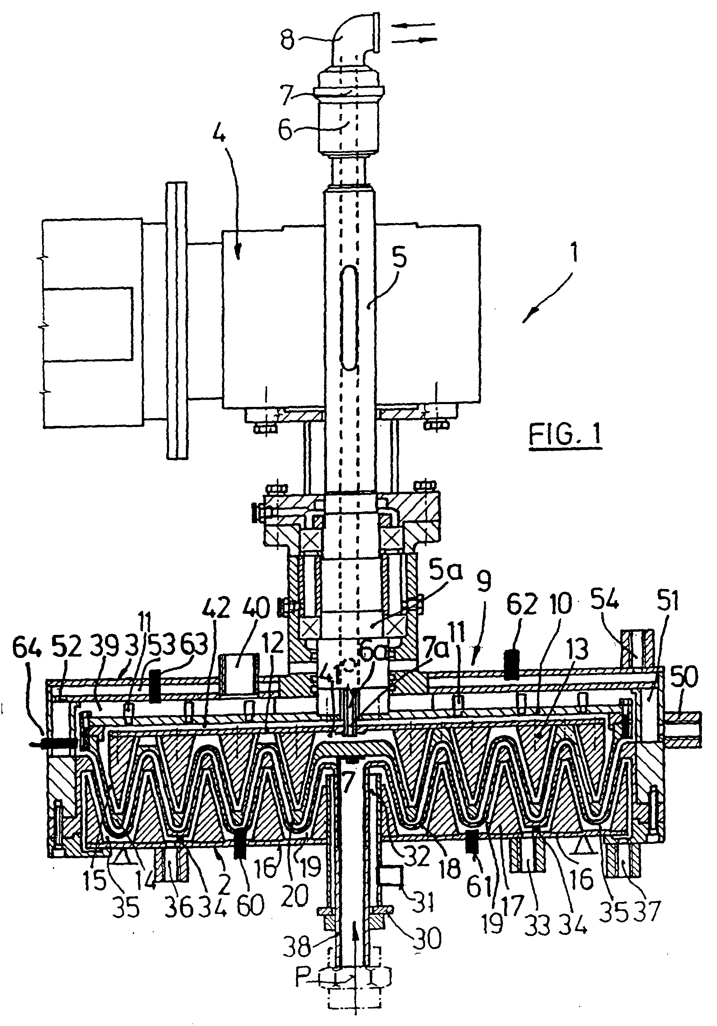

Wie man der Fig. 1 entnehmen kann, besteht die gesamthaft mit 1 bezeichnete Temperiervorrichtung aus einem Bauteil 2, das ortsfest angeordnet ist, und aus einem Bauteil 3, das mit einem Motor 4 und über eine Antriebswelle 5 in Drehbewegung versetzt werden kann.

Die Antriebswelle 5 ist als Hohlwelle ausgeführt und nimmt koaxial angeordnete Rohre 6, 7 auf, die die Zufuhr einer Kühlflüssigkeit gestatten sowie den Abfluß der Kühlflüssigkeit erlauben. Dies erfolgt über Anschlüsse, von denen einfachheitshalber nur der Anschluß 8 dargestellt ist.

Das untere Ende 5a der Welle 5 wird von einem ortsfesten Körper eines Gehäuses 9 drehbar gelagert; das Gehäuse ist doppelwandig ausgeführt, um innere Kammern zu schaffen, die im folgenden genauer beschrieben werden:

Mit der Welle 5, 5a ist eine Scheibe 10 verbunden, die auf der oberen Seite, die auf das Gehäuse zu gerichtet ist, eine Vielzahl von abstehenden Stiften 11 aufweist, die während der Drehbewegung der Scheibe 10 die Funktion von Rühr- und Mischmitteln für die Schokoladenmasse erfüllen.

Im Abstand von der Scheibe 10, verbunden mit dem Ende 5a der Antriebswelle, ist eine weitere Scheibe 12 vorgesehen, auf welcher konzentrische Ringe 13 angeordnet sind, welche im Schnitt die Form eines Kegels haben. Diese kegelförmigen Ringe 13 werden durch ein Blech 14 abgedeckt, das mit der Scheibe 10 verbunden ist, und das Blech 14 ist derartig verformt, daß es genau dem Verlauf der konzentrisch angeordneten konischen Ringe 13 folgt.

Das Blech 14 ist von den konzentrisch angeordneten und konisch ausgebildeten Ringen 13 getrennt, um auf diese Weise zwischen den konzentrisch angeordneten und konisch ausgebildeten Scheiben 13 und der Blechwand 14 sowie der Scheibe 12 und der Scheibe 10 einen Zwischenraum oder Spalt zu bilden.

Das Gestell oder das ortsfeste Gehäuse 9 der Vorrichtung 1 ist an der Unterseite durch einen Deckel 16 abgeschlossen.

Auch der Deckel 16 ist mit konzentrisch angeordneten Ringen 17 ausgerüstet, die ebenfalls im Querschnitt konische Form haben. Auch diese konzentrisch angeordneten konischen Ringe 17 der Scheibe 16 werden durch das verformte Blech 18 abgedeckt, wodurch zwischen der fest angeordneten Scheibe 16 und den konzentrisch angeordneten Ringen 17 und dem Blech 18 ein spaltförmiger Zwischenraum 19 gebildet wird.

Die konzentrisch angeordneten Ringe 17, zusammen mit dem Abdeckblech 18, sind gegenüber den konzentrischen Ringen 13 versetzt vorgesehen. Die Ringe 13 sind mit der drehbar gelagerten Scheibe 12 fest verbunden. Das Blech 18, das die konzentrisch angeordneten Ringe 17 der fest angeordneten Scheibe 16 abdeckt, dringt in die leeren Räume ein, die zwischen den konzentrisch angeordneten, konischen Ringen 12 und dem entsprechenden Blech 14 gebildet sind. Die Ringe 12 und das Blech 14 sind mit der drehbaren Scheibe 12 verbunden.

Es wird daher zwischen den konzentrisch angeordneten, drehbaren Ringen 12 und den feststehenden, konzentrisch vorgesehenen Ringen 20 ein Kanal gebildet, der, im Querschnitt der Bauteile 2, 3 gesehen, mäanderförmig ausgebildet ist.

In vorteilhafter Weise sind zwischen den Flächen der Bleche 14 und 18, die den mäanderförmigen Kanal 20 für das Produkt begrenzen, Einrichtungen zum Abschaben der Schokoladenmasse eingebaut, die auf die Wände 14 und 18 einwirken, um den Wärmeaustauch zwischen dem Produkt P, das durch den Kanal 20 fließt und der Kühlflüssigkeit in den Leitungen 15 und 19 weiterhin zu verbessern.

Zu diesem Zweck werden z.B. an der Wand 14 Platten oder Schaberprofile 100 befestigt. Durch Vorsehen eines solchen Schaberelementes 100 wird während der Drehbewegung der Scheibe 3 durch den Schaber 100 ständig das Produkt von der Wand 18 der feststehenden Scheibe 3 entfernt, und es wird dadurch die Bildung einer unerwünschten Produktablagerung verhindert, wodurch der Wärmetausch wesentlich verbessert wird.

Das scheibenförmige Bauteil 2, das ortsfest angeordnet ist, ist mit dem abstehenden Rohr 30 verbunden, welches über den Anschluß 31 für die Einspeisung einer Klimatisierungsflüssigkeit, insbesondere einer Kühlflüssigkeit, verfügt.

Im Inneren des scheibenförmigen Bauteiles 2, das ortsfest angeordnet ist, weist das Ende des Rohres 30 eine Öffnung 32 auf, die mit dem Kanal 19 der Kühlflüssigkeit in Verbindung steht, Kanal der mit einem Abluß 33 der Kühlflüssigkeit, die im Kanal 19 fließt, in Verbindung steht.

Vorteilhaft ist es, wenn der Abfluß 33 mit einer Klimatisiereinrichtung für die Flüssigkeit verbunden ist.

Diese Möglichkeit wurde in den Zeichnungen nicht dargestellt.

Der Kanal 19 weist in radial verschobener Lage gegen außen Trennschotte 34 auf, mit denen die Schaffung eines zusätzlichen Kanales 35 möglich wird, der die Versorgung über den Anschluß 36 einer zweiten Klimatisierungsflüssigkeit erlaubt, z.B. einer Flüssigkeit, deren Temperatur höher liegt, als die der Flüssigkeit, die den Anschluß 31 versorgt, der mit dem Rohr 30 verbunden ist.

Die Flüssigkeit, deren Versorgung über den Anschluß 36 erfolgt, wird durch den Anschluß 37 abgeleitet. Der Anschluß 37 steht mit der äußeren radialen Seite des Kanales 35 in Verbindung. Das Rohr 30, welches für die Versorgung der Klimatisierungsflüssigkeit vorgesehen ist, nimmt koaxial in seinem Inneren ein zweites Rohr 38 auf, das für die Zuführung unter Druck des zu behandelnden Produktes P zwischen die rinförmigen Bauteile 2, 3 vorgesehen ist.

Das Versorgungsrohr 38 führt in das Innere des ortsfesten, scheibenförmigen Bauteiles 2 und steht in Verbindung mit dem Kanal 20, der sich mäanderförmig von der Mitte der scheibenförmigen Bauteile 2, 3 radial nach außen erstreckt.

Die Breite des Kanales 20 ist von geringer Abmessung und der Kanal 20 erstreckt sich radial zur Außenseite der Vorrichtung 1 und endet in einer Kammer, welche die sich drehende Scheibe 10 mit den abstehenden Mischerstiften 11 aufnimmt.

Die Misch- und Rührkammer 39 steht mit einem Abflußstutzen 40 für den Auslauf des aus Schokoladenmasse bestehenden Produktes, das zuvor in der Vorrichtung 1 behandelt worden ist, in Verbindung.

Die Welle 5 ist wirkverbunden mit dem Bauelement 3 und dem Gehäuse 9 und weist im Inneren ein Rohr 7 für die Versorgung einer Kühlflüssigkeit auf. Die Versorgung erfolgt über das Endstück 7a, das im Inneren der Kammer 41 endet, und steht mit dem Zwischenraum in Verbindung, der sich mäanderförmig von der Mitte der Vorrichtung 1 zur radialen Außenseite ausbreitet, und die Kammer 42 erreicht, die von der unteren Seite der Scheibe 10 und der oberen Seite der Scheibe 12 gebildet wird.

Die Kammer 42 steht mit dem Ausfluß 6a des Rohres 6, das in der Welle 5 angeordnet ist, in Verbindung und erlaubt so den Abfluß der Klimatisierungsflüssigkeit über den Anschluß 8. In der Nähe einer Seite des Gehäuses 9 der Vorrichtung 1 ist ein Anschluß 50 vorgesehen, der mit der Ringkammer 51 in Verbindung steht und auf der entgegengesetzten Seite eine Öffnung 52 aufweist, die mit der Kammer 53 in Verbindung steht, die über der Kammer 39 vorgesehen ist, und welche die Scheibe 10 aufnimmt, die mit Misch- und Rühreinrichtungen ausgerüstet ist. Die Kammer 53 steht mit dem Anschluß für den Abschluß der Klimatisierungsflüssigkeit in Verbindung, die über den Anschluß 50 zugeführt wird.

Wie man aus Fig. 1 entnehmen kann, sind an verschiedenen Stellen des Gerätes 1 Fühler 60, 61, 62, 63 und 64 für die Temperaturmessung der Klimatisierungsflüssigkeit (Kühlung, Erwärmung des Produktes P) oder für die Temperaturmessung des sich in Bearbeitung befindlichen Produktes P vorgesehen.

In Fig. 1 sind nur schematisch einige dieser Fühler dargestellt. Diese Fühler sind an geeigneter Stelle der Vorrichtung 1 angebracht. Die Fühler 60, 61, 62, 63 und 64 erzeugen Signale, die an eine Kontroll- und Verarbeitungseinheit übertragen werden können, in der die eingehenden Signale verarbeitet werden, und eine Änderung oder Regelung der Fertigungsparameter durchführbar ist.

So kann z.B. die Fördermenge, mit der das Produkt P vom Eingangsrohr 38 zugeführt wird, verändert werden, man kann den Druck der Kühlflüssigkeit und die Strömungsgeschwindigkeit der Flüssigkeiten ändern, und es kann die Temperatur der Klimatisierungsflüssigkeit, die der Vorrichtung 1 zugeführt wird, verändert werden. Weiterhin kann mit dem Getriebemotor 4 die Drehzahl der Antrieswelle 5 verändert werden, indem die relative Geschwindigkeit zwischen den ortsfest angeordneten, konzentrischen, ringförmigen Vorsprüngen 18 und den sich in Bewegung befindlichen Ringvorsprüngen 14 verändert wird.

In den beiliegenden Zeichnungen ist der Kanal 20 für den Durchlauf des zu temperierenden Produkts als Kanal dargestellt worden, der im Schnitt einen sinusförmigen Verlauf hat.

Natürlich kann dieser Verlauf auch mäanderförmig und von geraden Teilstrecken gebildet sein, die jeweils um 90° umgeleitet sind. Es ist auch möglich, mehrere Kanäle 20 für den Durchfluß des zu behandelnden Produktes vorzusehen, dadurch wird die nutzbare Fläche für den Wärmeaustausch vergrößert wodurch die mengenmäßige Bearbeitungskapazität steigt.

Weiterhin ist es möglich, die lichte Weite des Kanals 20, der von dem zu bearbeitenden Produkt P durchflossen wird, zu ändern. Die lichte Weite dieses Kanals 20 muß nicht konstant sein, wie in den Figuren gezeigt, sondern man kann auch vorsehen, daß für den Kanal 20 die lichte Weite von der Mitte der Vorrichtung zum Rand der Vorrichtung zunimmt oder die lichte Weite des Kanals 20 vom Rand der Vorrichtung bis zu Mitte der Vorrichtung hin zunimmt.

Da der Radius der Vorrichtung von der Mitte der Vorrichtung zu deren Außenumfang zunimmt, erfolgt auch eine Zunahme der Umfangsgeschwindigkeit. Im Falle eines Kanals 20 mit konstanter Öffnungsweite wird man eine wesentliche Zunahme der Schnittkräfte erreichen, die auf das Produkt P einwirken, Kräfte, die in kritischer Situation die Umschmelzung des gesamten Anteils des in Kristallform vorliegenden Fettes oder eines Teiles dieses kristallisierten Fettes bewirken könnten und die geleistete Arbeit der Vorkristallisierung (Temperierung) zunichte machen würden.

Aus diesem Grund ist es vorzuziehen, den Kanal 20 für den Materialfluß zwischen der feststehenden Scheibe und der sich drehenden Scheibe mit zunehmender lichten Weite von der Mitte der Vorrichtung zum Rand der Vorrichtung auszubilden. Es könnte weiterhin vorteilhaft sein, die Vorrichtung trennbar auszuführen, das heißt in der Art, daß die feste Scheibe von der rotierenden Scheibe trennbar ausgeführt ist, um dadurch eine leichtere Reinigung der dargestellten Wände, die den mäanderförmiegen Kanal 20 begrenzen, zu ermöglichen.

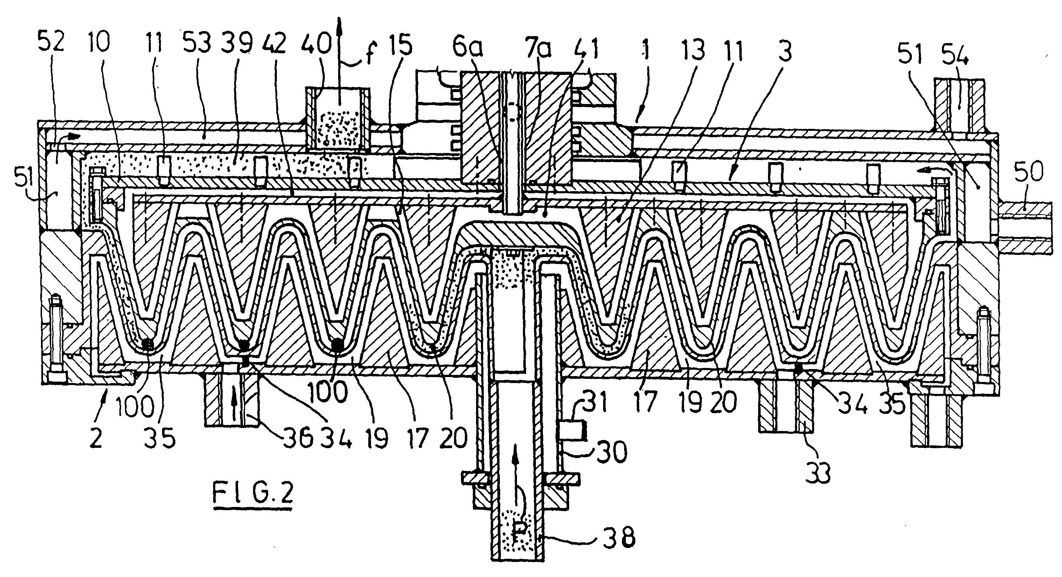

Die Arbeitsweise der Vorrichtung wird nun anhand der Fig. 2 genauer beschrieben.

Das Produkt P wird mit dem gewünschten Druck in das Rohr 38 eingespeist und bewegt sich im mäanderförmigen Kanal 20 von der Mitte der Vorrichtung 1 aus zum äußeren Umfang. Hier tritt das Produkt P in die Kammer 39 ein wo es einem Mischvorgang und einer Homogenisierung durch die abstehenden Stifte 11 unterzogen wird, die auf der rotierenden Scheibe 10 angeordnet sind. Danach tritt das Produkt P aus der Kammer 39 in Richtung des Pfeiles (f) aus, dies unter dem Einfluß des Druckes, der vom Produkt nachfolgenden P, das ständig durch das Rohr 38 eingespeist wird, aufgebaut wird. Das Produkt P fließt über den Anschluß 40 ab. Während des Vordringens des Produktes P entlang dem mäanderförmigen Kanal 20 bewegt sich das Produkt in Form einer sehr dünnen Schicht von 3 bis 15 mm. Die Klimatisierungsflüssigkeit, die über den Anschluß 31 und das Rohr 30, das mit dem mäanderförmig angeordneten Kanal 19 verbunden ist, zugeführt wird, wirkt ständig auf das Produkt P ein.

Die Klimatisierungsflüssigkeit, die über den Anschluß 31 zugeführt wird, verläßt den Kanal 19 über den Abflußanschluß 33.

Radial nach außen verschoben weist der Kanal 19 eine Ringwand 34 auf, um so einen zweiten Kühlkreis zu bilden, der aus einem Kanal 35 besteht, dem über den Anschluß 36 eine Klimatisierungsflüssigkeit zugeführt wird, deren Temperatur unterschiedlich sein wird von der Flüssigkeit, die dem Anschluß 31 zugeführt wird.

Während über den Anschluß 31 vor allem kaltes Wasser für Kühlzwecke eingesetzt wird, wird in den Klimatisierungskreislauf 35 eine wärmere Klimatisierungsflüssigkeit über den Anschluß 36 zugeführt, um das Produkt P kurzzeitig zu erwärmen, bevor es den mäanderförmigen Kanal 20 verläßt.

Über die Rohre 6a, 7a wird die Versorgung beziehungsweise der Abfluß von einem weiteren Flüssigkeitsstrom zur Klimatisierung durchgeführt; dieser läuft in die Kammer 41 ein, um entlang dem Kanal 15 zu fließen und am Ende des Kanals in die Kammer 41 einzulaufen und aus dieser Kammer über den Anschluß 6a abzufließen.

Schließlich wird Klimatisierungsflüssigkeit durch den Anschluß 50 zugeführt, um in die Ringkammer 51 einzufließen und die Kammer 53 zu durchlaufen, um dann die Vorrichtung 9 durch den Anschluß 54 zu verlassen.

Dadurch wird auf das Produkt P, das über das Rohr 38 zugeführt wird, eingewirkt, um eine Klimatisierung während des Durchlaufes vom Eingang 38 zum Stutzen 40 zu erzielen, dazu werden Klimatisierungsflüssigkeiten in verschiedenen hydraulischen Kreisläufen verwendet. Die Kühlkreisläufe können einfach kontrolliert und geregelt werden, besonders was Temperatur und Strömungsgeschwindigkeit anbetrifft.

Daher ist es möglich, in wirksamer und kontrollierter Weise thermisch auf das Produkt einzuwirken. Mit der thermischen Behandlung des Produktes P, wie diese in der Vorrichtung 1 gemäß der Erfindung durchgeführt wird, ist es möglich, die Baumaße des mechanischen Teiles der Einrichtung wesentlich zu verringern. Die Kühlung des Produktes P, das sich entlang dem mäanderförmigen Kanal 20 bewegt, ist sehr wirkungsvoll. Innerhalb kurzer Zeit erfolgt die Erzeugung von stabilen Kristallen des Typs "beta".

Dank der Vorhersehung von konzentrisch angeordneten, konisch ausgebildeten Ringen 17 auf der Innenseite des fest stehenden Teils 2 der Vorrichtung 1 und aufgrund der Vorsehung von konzentrisch angeordneten und konisch ausgebildeten Ringen 13 an dem sich drehenden Bauteil 3, 10 der Vorrichtung 1, wird ein sich mäanderförmig erstreckender Kanal 20 mit sehr großer Fläche geschaffen, die in einer Vorrichtung 1 enthalten ist, deren bauliche Abmessungen sehr gering sind. Des weiteren ist es möglich, ständig und in überwachter Weise Schnittkräfte auf die Fettpartikel des Produktes P zu übertragen, um die Bildung von stabilen "beta"-Kristallen zu erreichen.

Durch Vorsehen einer sich drehenden Scheibe 10 im Inneren der Kammer 39, in die das Produkt P am Ende des mäanderförmigen Kanals 20 eingespeist wird, und der Tatsache, daß die rotierende Scheibe 10 mit einer Vielzahl von abstehenden Stiften 11 oder ähnlichen Mischeinrichtungen versehen ist, wird eine einwandfreie Homogenisierung des Produktes P sowie eine ein einwandfreies Durchmischung der "beta"-Kristalle in der Kakaobutter, die im Schokoladenprodukt P enthalten ist, erzielt und man fördert in bester Weise die Vermehrung der "beta"-Kristalle aufgrund der eintretenden Katalysatorwirkung.

Die Vorrichtung 1 kann vollständig automatisiert werden und arbeitet kontinuierlich unter ständiger Kontrolle der technischen Parameter, wie z.B. der Temperatur des Produktes P, der Temperatur der Klimatisierungsflüssigkeiten sowie der Drehgeschwindigkeit des Bauteiles 3, das drehbar gegenüber dem fest angeordneten Bauteil 2 angeordnet ist.

## Patentansprüche

1. Vorrichtung (1) zum kontinuierlichen Temperieren oder Vorkristallisieren von Schokoladenmasse (P), bestehend aus einem ortsfesten Bauteil (2), das mit einem drehbar gelagerten Bauteil (3) zusammenarbeitet, und Eingänge (36, 31, 50) und Ausgänge (33, 54, 37) zum Zuführen von Klimatisierungsflüssigkeit sowie über Eingänge (38) und Ausgänge (15) für das zu bearbeitende Produkt (P) verfügt, **dadurch gekennzeichnet,** daß das ortsfest angeordnete Bauteil (2) und das drehbar angeordnete Bauteil (3) der Vorrichtung (1) die Form von kreisförmigen Scheiben haben, daß die scheibenförmigen Bauteile (2, 3) an ihren sich gegenüberliegenden Flächen ringförmige, koaxial angeordnete Vorsprünge (13, 17) aufweisen, daß die Vorsprünge (13) der einen Scheibe (12) in ringförmige Ausnehmungen, die zwischen den Vorsprüngen (17) der anderen Scheibe (16) gebildet sind, eindringen und, im Querschnitt gesehen, einen mäanderförmigen Kanal (20) bilden, der sich vom Eingang (38) für das zu bearbeitende Produkt (P) bis zum Ausgang (40) des bearbeiteten Produktes (P) erstreckt und daß unter den Mantelflächen (14, 18), die die konzentrisch angeordneten, ringförmigen Vorsprünge (13, 17) begrenzen, Kanäle (15, 19) für eine Klimatisierungsflüssigkeit vorgesehen sind.

2. Vorrichtung zum Temperieren nach Anspruch 1, **dadurch** **gekennzeichnet,** daß das Bauteil (3) drehbar gelagert ist und mit einer Antriebswelle (5) in Drehbewegung versetzt wird, die mit einem steuerbaren Getriebemotor (4) wirkverbunden ist.

3. Vorrichtung zum Temperieren, nach Anspruch 2, **dadurch gekennzeichnet,** daß die Antriebswelle (5) als Hohlwelle ausgebildet ist, die koaxial angeordnete Rohre (6, 7) für die Zuführung sowie den Abfluß einer Kühlflüssigkeit aufnimmt.

4. Vorrichtung zum Temperieren, nach Anspruch 1, **dadurch gekennzeichnet,** daß das untere Ende (5a) der Antriebswelle (5) drehbar im Körper eines ortsfest angeordneten Gehäuses (9) gelagert ist und daß mit der Welle (5, 5a) eine Scheibe (10) verbunden ist, die auf der zum Gehäuse (9) gerichteten Seite eine Vielzahl vorstehender Stifte (11) aufnimmt, die Einrichtungen zum Homogenisieren und Mischen bilden.

5. Vorrichtung zum Temperieren, nach Anspruch 1, **dadurch gekennzeichnet,** daß mit dem Ende (5a) der Antriebswelle (5) eine Scheibe (10) verbunden ist, die auf der den Stiften (11) gegenüberliegenden Seite konzentrische Ringe (13) aufweist, die, im Schnitt gesehen, konische Form haben.

6. Vorrichtung zum Temperieren, nach Ansprch 1, **dadurch gekennzeichnet,** daß die ortsfest angeordneten, konzentrischen Ringe (17) zusammen mit dem Abdeckblech (18) gegenüber den konzentrischen Ringen (13), die an der sich drehenden Scheibe (10) angeordnet sind, versetzt vorgesehen sind, so daß die konzentrischen und ortsfest vorgesehenen Ringe (17) zwischen die konzentrischen Ringe (13) der sich drehenden Scheibe (12) eindringen.

7. Vorrichtung zum Temperieren, nach Anspruch 1, **dadurch gekennzeichnet,** daß der Kanal (19) für die Klimatisierungsflüssigkeit Trennschotte (34) aufweist, um einen zusätzlichen Kanal (35) für die Versorgung einer weiteren Klimatisierungsflüssigkeit zu schaffen.

8. Vorrichtung zum Klimatisieren, nach Anspruch 1, **dadurch gekennzeichnet,** daß das Rohr (30) für die Versorgung der Klimatisierungsflüssigkeit, zur Versorgung des Kanals (19), koaxial ein weiteres Rohr (38) aufnimmt, das zum Zuführen des zu behandelnden Produktes (P) zwischen die scheibenförmigen Bauteile (2, 3) vorgesehen ist.

9. Vorrichtung zum Temperieren, nach Anspruch 1, **dadurch gekennzeichnet,** daß sich das Rohr (30) für die Versorgung des Produktes (P) in das Innere (41) des fest angeordneten scheibenförmigen Bauteiles erstreckt und mit dem Kanal (20), der sich von der Mitte der scheibenförmigen Bauteile (2, 3) radial nach außen und mäanderförmig erstreckt, in Verbindung steht.

10. Vorrichtung zum Temperieren, nach Anspruch 1, **dadurch gekennzeichnet,** daß längs dem Umfang des Gehäuses (9) der Vorrichtung ein Anschluß (50) vorgesehen ist, der mit einer Ringkammer (51) in Verbindung steht, die auf ihrer gegenüberliegenden Seite eine Öffnung (52) aufweist, die mit einer Kammer (53) in Verbindung steht, die über der Kammer (39) angeordnet ist, welche die Scheibe (10) aufnimmt, und daß die Kammer (53) mit einem Anschluß (54) für den Abfluß der Klimatisierungsflüssigkeit in Verbindung steht.

11. Vorrichtung zum Temperieren, nach Anspruch 1, **dadurch gekennzeichnet,** daß der Aufbau (1) der Einrichtung (2, 3, 4) Fühler (60, 61, 62, 63) zur Temperaturmessung der Klimatisierungsflüssigkeit oder zur Temperaturmessung des in Bearbeitung befindlichen Produktes (P) aufweist.

12. Vorrichtung zum Temperieren, nach Anspruch 1, **dadurch gekennzeichnet,** daß zwischen den Wänden (14 und 18), die den mäanderförmigen Kanal (20) begrenzen, Schabereinrichtungen (100) vorgesehen sind.

13. Vorrichtung zum Temperieren, nach Anspruch 1, **dadurch gekennzeichnet,** daß die lichte Weite des Kanals (20), die von Wänden (14 und 18) begrenzt ist, von der Mitte der Vorrichtung zum Rand der Vorrichtung zunimmt.

## Claims

1. Device (1) for continual tempering or pre-crystallisation of a chocolate mass (P), consisting of a stationary component (2) which cooperates with a rotatably mounted component (3), and inlets (36, 31, 50) and outlets (33, 54, 37) for supplying conditioning liquid and having inlets (38) and outlets (15) for the product (P) to be processed, characterised in that the stationarily disposed component (2) and the rotatably disposed component (3) of the device (1) are in the form of circular discs, that the disc-like components (2, 3) have annular, coaxially disposed projections (13, 17) on their mutually opposite surfaces, that the projections (13) of one disc (12) enter annular recesses, which are formed between the projections (17) of the other disc (16), and, when seen in cross-section, form a meandering channel (20) which extends from the inlet (38) for the product (P) to be processed to the outlet (40) for the product (P) to be processed and that below the outer surfaces (14, 18), which define the concentrically disposed annular projections (13, 17), channels (15, 19) are provided for a conditioning liquid.

2. Tempering device according to claim 1, characterised in that the component (3) is rotatably mounted and is rotated by a drive shaft (5) which is operationally connected to a controllable geared motor (4).

3. Tempering device according to claim 2 ,characterised in that the drive shaft (5) is formed as a hollow shaft which receives coaxially disposed pipes (6, 7) for the supply and drainage of a cooling liquid.

4. Tempering device according to claim 1, characterised in that the lower end (5a) of the drive shaft (5) is rotatably mounted in the body of a stationarily disposed housing (9) and that a disc (10) is connected to the shaft (5, 5a), which disc receives a multiplicity of protruding pins (11) on the side directed towards the housing (9), which pins form homogenising and mixing devices.

5. Tempering device according to claim 1, characterised in that a disc (10) is connected to the end (5a) of the drive shaft (5) and comprises concentric rings (13) on the side opposite the pins (11), which rings are conical when seen in cross-section.

6. Tempering device according to claim 1, characterised in that the stationarily disposed concentric rings (17) together with the cover plate (18) are provided offset with respect to the concentric rings (13) which are disposed on the rotating disc (10), so that the concentric and stationarily provided rings (17) penetrate between the concentric rings (13) of the rotating disc (12).

7. Tempering device according to claim 1, characterised in that the channel (19) for the conditioning liquid comprises separating partitions (34) in order to create an additional channel (35) for the supply of a further conditioning liquid.

8. Tempering device according to claim 1, characterised in that the pipe (30) for providing the conditioning liquid for supplying the channel (19) coaxially receives a further pipe (38), which further pipe is provided to supply the product (P) to be treated between the disc-like components (2, 3).

9. Tempering device according to claim 1, characterised in that the pipe (30) for supplying the product (P) extends to the inside (41) of the fixedly disposed disc-like component and is connected to the channel (20) which extends radially outwards from the middle of the disc-like components (2, 3) in a meandering manner.

10. Tempering device according to claim 1, characterised in that along the periphery of the housing (9) of the device a connection (50) is provided which is connected to an annular chamber (51) which comprises an opening (52) on its opposite side, which opening is connected to a chamber (53) which is disposed above the chamber (39) which receives the disc (10), and that the chamber (53) is connected to a connection (54) for the drainage of the conditioning liquid.

11. Tempering device according to claim 1, characterised in that the structure (1) of the device (2, 3, 4) comprises sensors (60, 61, 62, 63) for measuring the temperature of the conditioning liquid or for measuring the temperature of the product (P) which is being processed.

12. Tempering device according to claim 1, characterised in that between the walls (14 and 18) which define the meandering channel (20), ductor devices (100) are provided.

13. Tempering device according to claim 1, characterised in that the open width of the channel (20) which is defined by the walls (14 and 18), increases from the middle of the device to the edge of the device.

## Revendications

1. Dispositif (1) pour la mise à température continue ou la cristallisation préalable d'une masse de chocolat (P), constitué d'un composant fixe (2) qui coopère avec un composant (3) logé d'une manière rotative, et qui dispose d'entrées (36, 31, 50) et de sorties (33, 54, 37) pour l'amenée d'un liquide de climatisation et qui dispose d'entrées (38) et de sorties (15) pour le produit (P) à traiter, caractérisé en ce que le composant fixe (2) et le composant (3) disposé d'une manière rotative du dispositif (1) ont la forme de disques circulaires, en ce que les composants (2, 3) en forme de disque présentent à leurs faces opposées l'une à l'autre des saillies annulaires (13, 17) disposées coaxialement, en ce que les saillies (13) d'un disque (12) s'engagent dans des évidements annulaires formés entre les saillies (17) de l'autre disque (16) et forment, vues en section transversale, un canal en forme de méandre (20) qui s'étend de l'entrée (38) pour le produit à traiter (P) jusqu'à la sortie (40) du produit traité (P), et en ce que sont prévus sous les faces d'enveloppe (14, 18) qui délimitent les saillies annulaires (13, 17) disposées d'une manière concentrique, des canaux (15, 19) pour un liquide de climatisation.

2. Dispositif pour la mise à température selon la revendication 1, caractérisé en ce que le composant (3) est logé d'une manière rotative et est entraîné en rotation par un arbre d'entraînement (5) qui est en liaison active avec un moteur à engrenage (4) pouvant être commandé.

3. Dispositif pour la mise à température selon la revendication 2, caractérisé en ce que l'arbre d'entraînement est réalisé comme arbre creux qui reçoit des tubes (6, 7) disposés coaxialement pour l'amenée ainsi que pour l'évacuation d'un liquide de refroidissement.

4. Dispositif pour la mise à température selon la revendication 1, caractérisé en ce que l'extrémité inférieure (5a) de l'arbre d'entraînement (5) est logée d'une manière rotative dans le corps d'un boîtier fixe (9), et qu'il est relié à l'arbre (5, 5a) un disque (10) qui reçoit au côté orienté vers le boîtier (9) une pluralité de pointes saillantes (11) qui constituent des installations pour l'homogénéisation et le mélange.

5. Dispositif pour la mise à température selon la revendication 1, caractérisé en ce qu'il est relié à l'extrémité (5a) de l'arbre d'entraînement (5) un disque (10) qui présente au côté opposé aux pointes (11) des anneaux concentriques (13) qui, vus en section transversale, ont une forme conique.

6. Dispositif pour la mise à température selon la revendication 1, caractérisé en ce que les anneaux concentriques (17) disposés d'une manière fixe, ensemble avec la tôle de recouvrement (18), sont décalés par rapport aux anneaux concentriques (13) qui sont disposés au disque tournant (10) de telle sorte que les anneaux concentriques et fixes (17) pénètrent entre les anneaux concentriques (13) du disque tournant (12).

7. Dispositif pour la mise à température selon la revendication 1, caractérisé en ce que le canal (19) pour le liquide de climatisation présente une cloison de séparation étanche (34) pour créer un canal supplémentaire (35) pour l'amenée d'un autre liquide de climatisation.

8. Dispositif de climatisation selon la revendication 1, caractérisé en ce que le tube (30) destiné à l'amenée du liquide de climatisation, pour l'alimentation du canal (19), reçoit coaxialement un tube additionnel (38) qui est prévu pour l'amenée du produit à traiter (P) entre les composants en forme de disque (2, 3).

9. Dispositif pour la mise à température selon la revendication 1, caractérisé en ce que le tube (30) pour l'amenée du produit (P) s'étend dans l'intérieur (41) du composant fixe en forme de disque et est en liaison avec le canal (20) qui s'étend depuis le milieu des composants en forme de disque (2, 3) radialement vers l'extérieur et en forme de méandre.

10. Dispositif pour la mise à température selon la revendication 1, caractérisé en ce qu'il est prévu le long du pourtour du boîtier (9) du dispositif un raccord (50) qui est en liaison avec une chambre annulaire (51) qui présente sur son côté opposé une ouverture (52) qui est en liaison avec une chambre (53) qui est disposée au-dessus de la chambre (39) qui reçoit le disque (10), et en ce que la chambre (53) est en liaison avec un raccord (54) pour l'évacuation du liquide de climatisation.

11. Dispositif pour la mise à température selon la revendication 1, caractérisé en ce que la construction (1) de l'installation (2, 3, 4) présente des capteurs (60, 61, 62, 63) pour mesurer la température du liquide de climatisation ou pour mesurer la température du produit (P) en traitement.

12. Dispositif pour la mise à température selon la revendication 1, caractérisé en ce que sont prévues entre les parois (14 et 18) qui délimitent le canal (20) en forme de méandre, des installations de raclage (100).

13. Dispositif pour la mise à température selon la revendication 1, caractérisé en ce que la largeur intérieure du canal (20), délimitée par les parois (14 et 18), augmente du milieu du dispositif vers le bord du dispositif.
